# DEMANDE DE BREVET EUROPEEN

(11) **EP 0 701 935 A1**
(43) Date de publication de la demande: **20.03.1996**
(21) Numéro de dépôt: 94402044.5
(22) Date de dépôt: 13.09.1994
(51) Int. Cl.: B60T 7/08

(54) **Dispositif de commande de frein de stationnement à demultiplication de l'effort**

(71) Demandeur: SYSTEMES B L G, F-60730 Ste Geneviève (FR)
(72) Inventeur: Tate, Jean-Jacques, F-60500 Chantilly (FR); Kaczmarek, Philippe, F-42000 St Etienne (FR)
(74) Mandataire: Schrimpf, Robert

(57) **Abrégé**

L'invention concerne un dispositif pour actionner un câble de commande d'un frein de stationnement d'un véhicule.

Ce dispositif comprend un secteur porte-câble (10) monté à pivotement autour d'un axe fixe (11) et à relier au câble de commande et un levier de manoeuvre monté à pivotement autour d'un axe fixe (21), apte à déplacer, lorsqu'entraîné manuellement en rotation, le secteur porte-câble pour agir sur le frein. Le levier de manoeuvre (20) et le secteur porte-câble (10) sont couplés en rotation par l'intermédiaire d'une liaison à engrenage épicycloïdal (30, 40) agencée de manière à démultiplier l'effort à exercer sur le levier de manoeuvre pour entrainer en rotation le secteur porte-câble et serrer le frein.

## Description

La présente invention concerne un dispositif d'actionnement d'un frein de stationnement d'un véhicule.

On connaît des dispositifs d'actionnement de frein de stationnement de véhicule automobile, communément appelés freins à main, comprenant un secteur porte-câble monté à pivotement autour d'un axe fixe, relié à un câble d'actionnement du frein et un levier de manoeuvre monté à pivotement autour du même axe, apte à déplacer, lorsqu'entraîné vers le haut en rotation, le secteur porte-câble pour tirer sur le câble et serrer le frein. Dans ces dispositifs, le levier de manoeuvre entraîne directement au moyen d'une butée le secteur porte-câble en rotation, et l'effort à exercer sur le levier pour serrer le frein dépend de la longueur du levier de manoeuvre. Les dispositifs d'actionnement connus de ce type résultent d'un compromis entre d'une part le choix d'une grande longueur de levier de manoeuvre pour disposer d'un effet de bras de levier important et actionner de façon aisée le frein de stationnement et d'autre part le choix d'une courte longueur de levier de manoeuvre pour répondre à des impératifs d'encombrement.

L'objet de l'invention réside dans un dispositif d'actionnement qui permet de serrer de façon aisée le frein de stationnement tout en étant d'un encombrement réduit.

Selon une première caractéristique de l'invention, le levier de manoeuvre et le secteur porte-câble sont aptes à être couplés en rotation, au moins lors du fonctionnement du dispositif, par l'intermédiaire d'une liaison à engrenage épicycloïdal, agencée de manière à démultiplier l'effort à exercer sur le levier de manoeuvre pour entraîner en rotation le secteur porte-câble.

Avantageusement, le secteur porte-câble et le levier de manoeuvre sont montés à rotation autour d'un premier et d'un deuxième axes respectifs fixes, parallèles et non confondus.

Avantageusement, le secteur porte-câble et le levier de manoeuvre comportent respectivement un premier et un deuxième secteurs dentés s'étendant selon des premier et deuxième arcs de cercles centrés sur les premier et deuxième axes et conformés pour s'engrener. Le rayon du premier secteur denté est supérieur au rayon du deuxième secteur denté. Les dents du premier secteur denté sont dirigées radialement vers l'intérieur tandis que les dents du deuxième secteur denté sont dirigées radialement vers l'extérieur.

Avantageusement, le dispositif comporte une crémaillère et le levier de manoeuvre est muni d'un cliquet mobile adapté à venir en prise avec cette crémaillère pour interdire le mouvement de pivotement du levier dans un sens correspondant au desserrage du frein. Le levier de manoeuvre comporte des moyens pour agir sur le cliquet et le libérer en vue de desserter le frein.

Dans une réalisation de l'invention, la crémaillère est fixe. En variante, dans une autre réalisation de l'invention la crémaillère est mobile et solidaire du secteur porte-câble. Avantageusement, le secteur porte-câble présente une lumière centrale sur un bord de laquelle est découpé le premier secteur denté et cette lumière centrale est traversée par le deuxième axe.

Avantageusement, le deuxième secteur denté est découpé sur un bord d'une plaque articulée sur le deuxième axe. Dans une réalisation de l'invention, le levier de manoeuvre comporte un carter présentant deux portions embouties fixées de part et d'autre de cette plaque.

Il peut être avantageux dans certains cas de permettre, pour des raisons d'encombrement, un effacement du levier de manoeuvre en position de serrage du frein. L'invention y parvient, dans une réalisation du dispositif d'actionnement, par le fait que le levier de manoeuvre comporte un carter à l'intérieur duquel est monté à coulissement une tringle de commande munie en extrémité d'un bouton poussoir, par le fait que le dispositif comporte une pièce intermédiaire solidaire du deuxième secteur denté et sur laquelle est monté un cliquet mobile apte à venir en prise sur une crémaillère pour interdire le mouvement de pivotement de la pièce intermédiaire dans le sens du desserrage du frein, la tringle de commande étant apte à agir par une extrémité sur le cliquet pour le libérer de la crémaillère lorsqu'une pression est exercée sur le bouton poussoir, le carter étant apte à déplacer, par effet de butée, la pièce intermédiaire lorsqu'entraîné en rotation dans le sens d'une traction sur le câble de commande, le mouvement de retour du carter étant normalement empêché par butée de la tringle de commande contre une surface d'appui de la pièce intermédiaire, et par le fait que la tringle de commande est apte à quitter ladite surface d'appui de la pièce intermédiaire par traction sur le bouton poussoir, pour autoriser un pivotement d'effacement du carter indépendamment de la pièce intermédiaire.

Avantageusement, la pièce intermédiaire comporte deux flancs fixés de part et d'autre d'une plaque articulée sur le deuxième axe, et sur laquelle est ménagé le deuxième secteur denté et la pièce intermédiaire porte un axe sur lequel est monté à pivotement ledit cliquet, cet axe comportant une extrémité axiale s'étendant dans un renfoncement ménagé sur une aile du carter, ce dernier étant apte à entraîner en pivotement la pièce intermédiaire par butée d'un bord dudit renfoncement contre ladite extrémité axiale.

Avantageusement, ladite lumière centrale sur laquelle est découpé le premier secteur denté présente des bords s'étendant depuis le premier secteur denté vers le premier axe étant conformés pour contacter des bords opposés respectifs de la plaque articulée sur le deuxième axe et sur laquelle est découpé le deuxième secteur denté, afin de limiter la course en rotation de cette dernière.

D'autres caractéristiques et avantages de la présente invention apparaîtront à la lecture de la description détaillée qui va suivre, de deux exemples de réalisation non limitatifs de l'invention et à l'examen du dessin annexé sur lequel :
- la figure 1 représente de façon schématique en vue de côté un dispositif d'actionnement selon une première réalisation de l'invention, le levier de manoeuvre étant montré en position rabattue,
- la figure 2 est une vue analogue à la figure 1, avec arrachement partiel montrant des détails de réalisation,
- la figure 3 est une vue analogue à la figure 1, le levier de manoeuvre étant représenté en position de serrage du frein de stationnement,
- la figure 4 est une vue analogue à la figure 3, avec attachement partiel montrant des détails de réalisation,
- la figure 5 est une vue de face du dispositif d'actionnement selon la première réalisation de l'invention, le levier de manoeuvre étant représenté en position relevée,
- la figure 6 est une vue analogue à la figure 5 avec arrachement partiel montrant des détails de réalisation,
- la figure 7 est une vue de côté, avec attachement partiel, d'un dispositif d'actionnement selon une deuxième réalisation de l'invention, et
- la figure 8 est une vue selon le trait de coupe VIII - VIII de la figure 7.

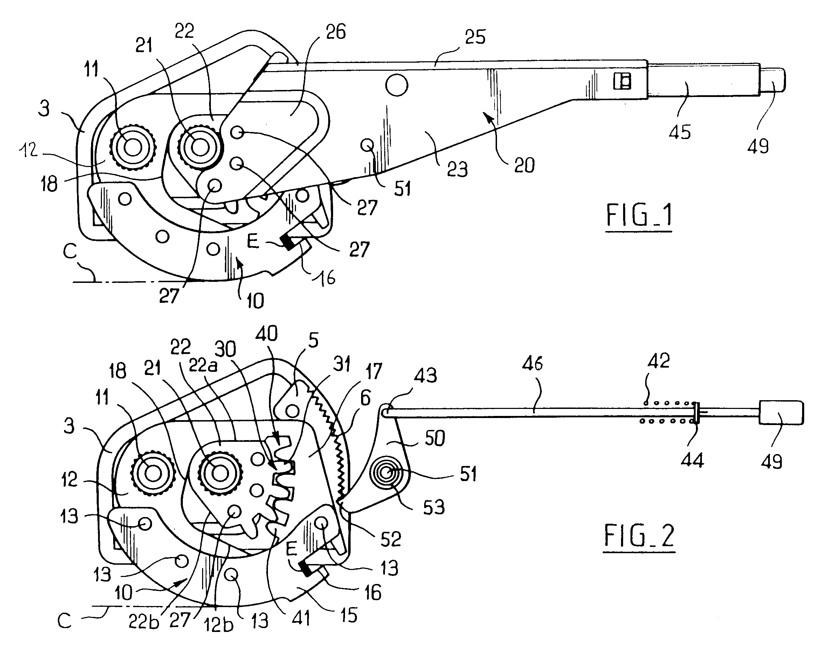

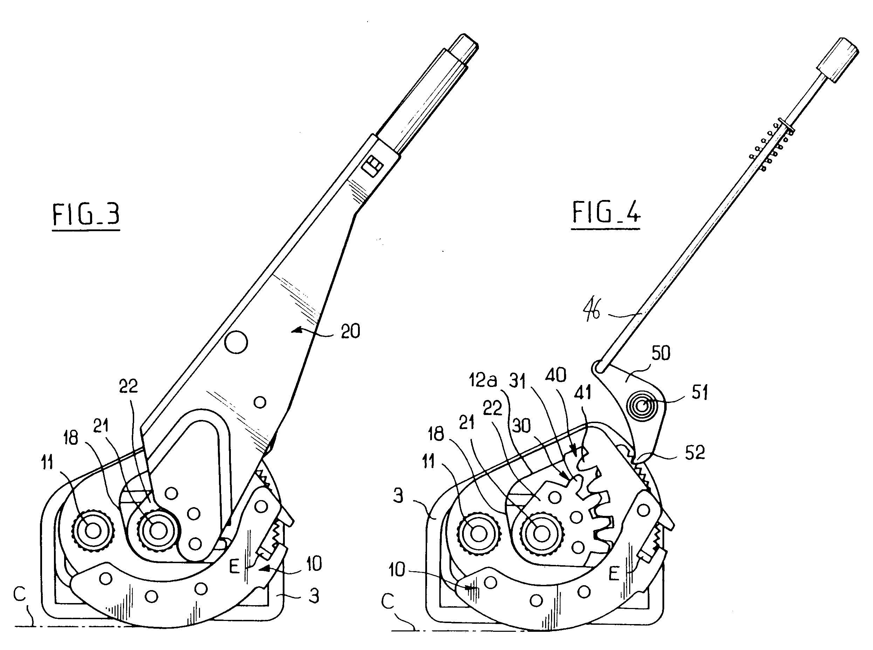

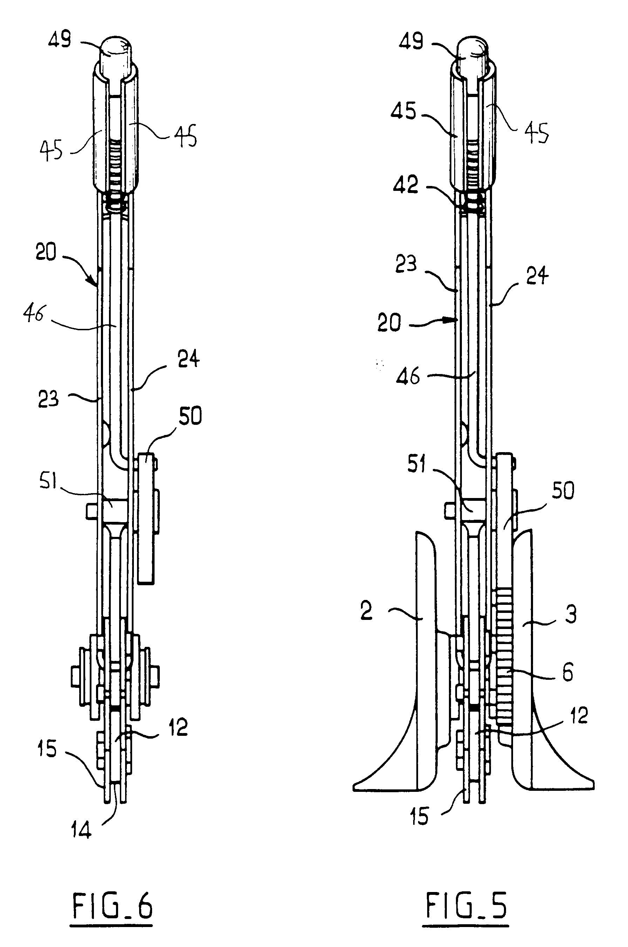

Le premier exemple de réalisation du dispositif d'actionnement représenté sur les figures 1 à 6 comporte deux cornières de fixation 2 et 3 à fixer côte-à-côte par tout moyen approprié sur le plancher du véhicule, non représenté. Pour la clarté des dessins, on a enlevé la cornière 2 sur les figures 1 à 4. Entre des parties en regard des cornières 2 et 3 sont montés un premier 11 et un deuxième 21 axes fixes sur lesquels sont respectivement articulés un secteur porte-câble 10 et un levier de manoeuvre 20. Les premier et deuxième axes 11 et 21 sont parallèles entre eux et s'étendent dans un même plan généralement parallèle au plancher du véhicule. Le secteur porte-câble 10 comprend, dans l'exemple de réalisation décrit, une plaque plane 12 articulée sur l'axe 11 et une pièce de guidage 15 prolongeant vers le bas la plaque 12, fixée sur celle-ci au moyen de rivets 13 ou par tout autre moyen approprié connu de l'homme de métier.

La pièce de guidage 15 sert à l'accrochage et au guidage d'un câble C d'actionnement du frein de stationnement, partiellement représenté. Elle présente en vue de côté, comme représenté sur la figure 2, une forme générale curviligne dont la concavité est orientée du côté de l'axe 11 et elle est plus particulièrement constituée, dans l'exemple de réalisation décrit, par deux ferrures rivées de part et d'autre de la plaque 12. Les deux ferrures précitées définissent entre elles et avec le bord inférieur de la plaque 12 une gorge de guidage 14 conformée pour recevoir et guider le câble C. La pièce de guidage 15 comporte à son extrémité située du côté du levier de manoeuvre un logement 16 destiné à l'accrochage, de façon connue en soi, d'un embout E d'extrémité du câble C. En variante, on peut proposer de ne pas rapporter de pièce de guidage 15 sur la plaque 12 et d'accrocher directement l'embout E sur celle-ci.

Le levier de manoeuvre 20, qui est monté à rotation sur le deuxième axe 21, comprend un carter présentant deux ailes 23 et 24 s'étendant en regard l'une de l'autre et réunies par un dos rectiligne 25 convexe vers l'extérieur. Une poignée en matière plastique, non représentée, est surmoulée sur le carter et un bouton poussoir 49 est guidé à coulissement à l'extrémité libre du carter entre des surfaces cylindriques 45 des ailes 23 et 24. Le bouton poussoir 49 est fixé à une extrémité d'une tige de poussée 46 articulée à l'autre extrémité, en 43, sur un cliquet mobile 50. Ce dernier est monté à pivotement autour d'un axe 51, parallèle aux axes 11 et 21, entre les ailes 23 et 24 du carter et comporte une extrémité 52 conformée pour venir en prise sur la denture 6 d'une crémaillère 5 fixée sur la cornière 3, comme cela sera précisé dans la suite. Le carter est monté à rotation autour de l'axe 21 au moyen d'une plaque plane 22 articulée sur l'axe 21, fixée entre des portions embouties 26 des ailes 23 et 24 au moyen de rivets 27 ou par tout autre moyen approprié.

La plaque 12 du secteur porte-câble 10 présente une lumière centrale 18 à l'intérieur de laquelle est disposée la plaque 22 et au travers de laquelle s'étend l'axe 21. Les portions embouties 26 des ailes 23 et 24 fixées sur la plaque 22 s'étendent de part et d'autre d'une portion 17 de la plaque 12 située, par rapport à la lumière centrale 18, à l'opposé du premier axe 11.

Des secteurs dentés 30 et 40 venant en prise l'un dans l'autre et formant engrenage épicycloïdal sont respectivement réalisés par découpage sur les plaques 22 et 12 précitées. Plus particulièrement, comme représenté, le secteur denté 30 est formé sur un bord de la plaque 22 s'étendant selon un arc de cercle centré sur le deuxième axe 21 et présente quatre dents 31 s'étendant radialement vers l'extérieur. Le secteur denté 40 est formé sur un bord de la lumière centrale 18 s'étendant selon un arc de cercle centré sur le premier axe 11, délimite radialement vers l'intérieur la portion 17 précitée, et présente quatre dents 41 s'étendant radialement vers l'intérieur. Le profil des dents 31 et 41 est dessiné, de façon connue en elle-même, pour que les secteurs dentés 30 et 40 s'engrènent. Dans l'exemple de réalisation décrit, il s'agit de dentures droites.

La lumière centrale 18 présente des bords supérieur 12a et inférieur 12b, s'étendant depuis les extrémités angulaires du secteur denté 40 vers le premier axe 11, qui sont conformés pour venir en butée, respectivement contre des bords opposés supérieur 22a et inférieur 22b de la plaque 22, afin de limiter la course en rotation du levier de manoeuvre 20 autour du deuxième axe 21. Plus particulièrement, dans l'exemple de réalisation décrit, les bords supérieur 12a et inférieur 12b de la lumière centrale 18 convergent en direction du premier axe 11 en formant entre eux un angle voisin de 25° et les bords supérieur 22a et inférieur 22b de la lumière centrale 18 convergent en direction du deuxième axe 21 en formant entre eux un angle voisin de 50°.

Dans la réalisation décrite sur les figures 1 à 6, la crémaillère 5 est fixée sur la cornière 3, et elle est positionnée par rapport au cliquet mobile 50 de sorte que l'extrémité 52 de ce dernier puisse interdire, en venant en prise sur sa denture 6 en l'absence d'une pression exercée sur le bouton poussoir 49, le mouvement de pivotement du levier de manoeuvre 20 autour de l'axe 21 dans le sens tendant à relâcher le câble C et à desserrer le frein, c'est-à-dire dans le sens horaire sur les figures 1 à 4. La denture 6 s'étend selon un arc de cercle centré sur le deuxième axe 21. Le bouton poussoir 49 est rappelé en position de repos par un ressort hélicoïdal 42 travaillant en compression et enroulé sur la tige de poussée 46. Le ressort 42, partiellement représenté sur les figures, s'appuie à une extrémité sur une rondelle 44 solidaire de la tige de poussée 46 et à l'autre extrémité sur une surface appropriée du carter. Le cliquet 50 est avantageusement sollicité en prise contre la denture 6 de la crémaillère 5 par un ressort 53 travaillant en torsion et enroulé sur l'axe 51. De préférence, l'extrémité 52 du cliquet 50 est conformée pour glisser sur la denture 6 lorsque le levier de manoeuvre est relevé en position de serrage du frein.

Le fonctionnement de la première réalisation du dispositif d'actionnement de frein de stationnement qui vient d'être décrite est le suivant.

Pour serrer le frein, l'utilisateur relève le carter du levier de manoeuvre 20 et déplace ainsi, par l'intermédiaire de la liaison à engrenage épicycloïdal formée par les secteurs dentés 30 et 40 venant en prise l'un dans l'autre, le secteur porte-câble 10 dans le sens anti-horaire sur les figures pour tirer sur le câble C. La course en rotation autour du premier axe 11 du secteur porte-câble 10 est moindre que celle du levier de manoeuvre 20 autour du deuxième axe 21, et l'effort à exercer pour tirer sur le câble C est réduit par rapport aux dispositifs connus présentant une longueur de levier comparable. Le pivotement vers le haut du levier de manoeuvre 20, facilité si nécessaire par une pression exercée sur le bouton poussoir 49 libérant l'extrémité 52 du cliquet 50 de la denture 6, est limité par butée du bord inférieur 12b de la plaque 12 contre le bord inférieur 22b de la plaque 22.

Pour desserrer le frein, l'utilisateur appuie sur le bouton poussoir 49 et libère l'extrémité 52 du cliquet 50 de la denture 6. Le levier de manoeuvre 20 peut alors être rabattu pour entrainer le secteur porte-câble 10 dans le sens horaire sur les figures, et relâcher le câble C.

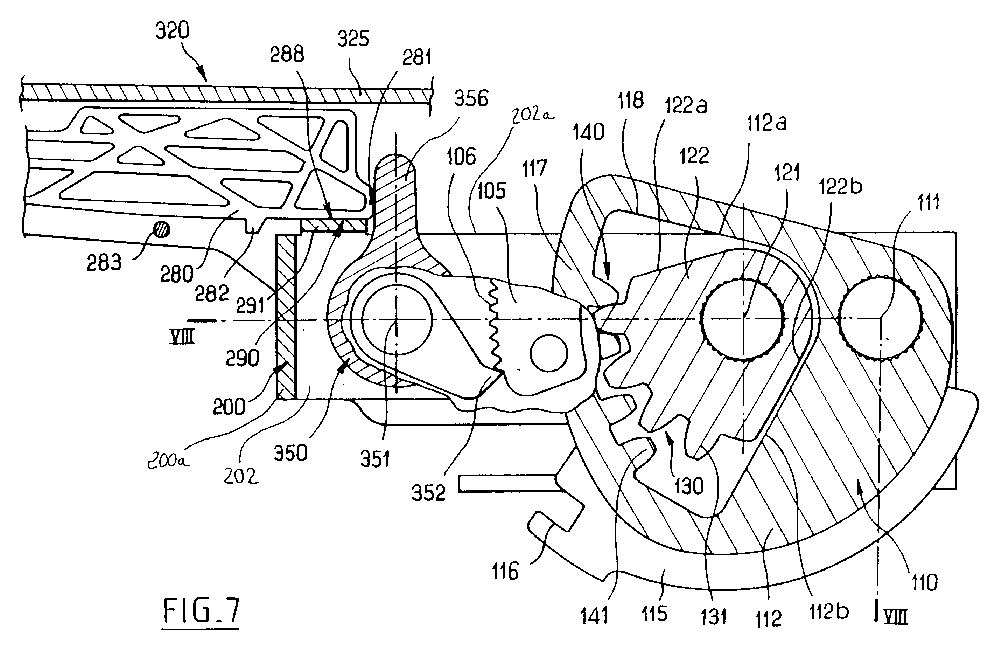

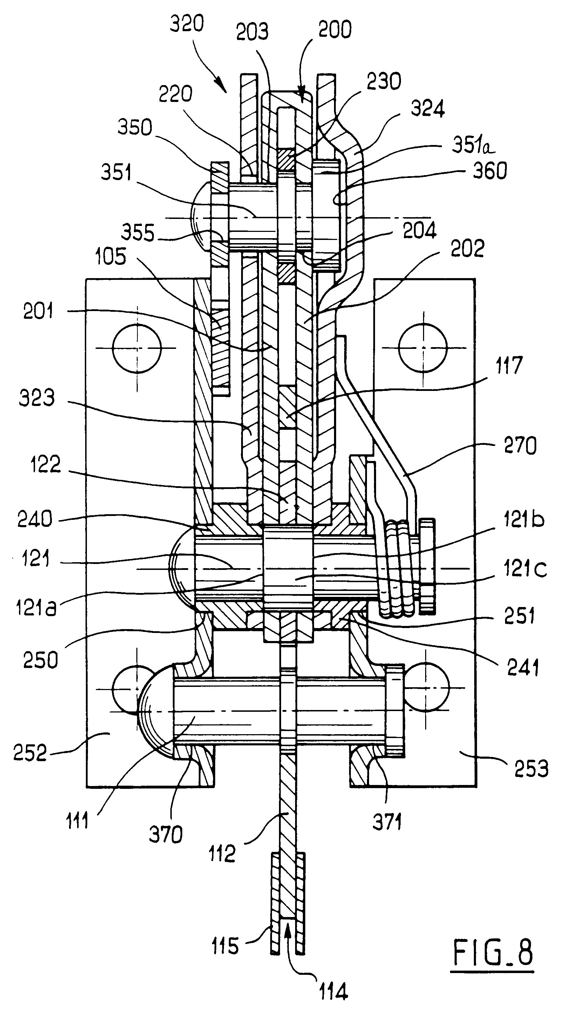

Il peut être intéressant, pour réduire l'encombrement en hauteur du levier de manoeuvre, d'effacer ce dernier en position de serrage du frein. On a représenté sur les figures 7 et 8 un deuxième exemple de réalisation de l'invention dans lequel il est possible de rabattre le levier de manoeuvre tout en maintenant le serrage du frein. Certains éléments de cette deuxième réalisation de l'invention, similaires à des éléments de la première, ne sont pas décrits à nouveau en détails et portent simplement une référence augmentée de cent.

Dans cette deuxième réalisation de l'invention, le dispositif d'actionnement comprend une pièce intermédiaire 200 en forme de U, comportant deux flancs 201 et 202 plans et parallèles entre-eux, venus de pliage d'une tôle sur elle-même. Les flancs 201 et 202 s'articulent sur un collet 121c d'un axe fixe 121, situé entre deux paliers 240 et 241. Une plaque 122 articulée sur le collet 121c de l'axe 121 est insérée entre les flancs 201 et 202 et fixée à ces derniers par tout moyen approprié (soudage, rivetage ...). La plaque 122 présente un secteur denté 130 et se situe à l'intérieur d'une lumière 118 d'une plaque 112 articulée sur un axe fixe 111 parallèle à l'axe 121. La plaque 112 comporte un secteur denté 140 venant en prise avec le secteur 130 pour former un engrenage épicycloïdal conformément à l'invention. L'axe 111 est monté à ses extrémités dans des logements cylindriques 370 et 371 ménagés sur des faces internes en regard de deux cornières de fixation 252 et 253 reposant sur le plancher du véhicule. Les paliers 240 et 241 sont montés dans des perçages en regard 250 et 251 des cornières de fixation 252 et 253 et viennent en butée, par leurs extrémités axialement intérieures, contre les faces axiales 121a et 121b du collet 121c de l'axe 121.

Un axe 351 présentant à une extrémité axiale une tête épaulée 351a est engagé dans des perçages en regard 203 et 204 des flancs 201 et 202 et vient axialement en butée par la tête épaulée 351a contre la face externe du flanc 202. Une rondelle 230 formant entretoise est montée sur l'axe 351 entre les flancs 201 et 202. L'autre extrémité axiale de l'axe 351 fait saillie sur la surface extertie du flanc 201 comme cela sera précisé dans la suite.

Un carter de levier de manoeuvre 320 présentant deux ailes 323 et 324 réunies par un dos 325 est monté à rotation autour de l'axe 121, au moyen de perçages des ailes 323 et 324 dans lesquels sont engagés respectivement les paliers 240 et 241. La pièce intermédiaire 200 est montée à pivotement autour de l'axe 121 entre les ailes 323 et 324 du carter. Les paliers 240 et 241 s'interposent axialement par des épaulements entre les faces externes des ailes 323 et 324 et les faces en regard des cornières 252 et 253.

La tête épaulée 351a de l'axe 351 s'étend à l'intérieur d'un renfoncement curviligne 360, venu d'emboutissage, ménagé sur la face interne de l'aile 324 du carter. Ce renfoncement 360, ouvert vers la pièce intermédiaire 200, s'étend selon un arc de cercle centré sur l'axe 121 et présente à une extrémité angulaire un bord transversal inférieur apte à contacter la tête 351a pour entrainer en rotation la pièce intermédiaire 200 autour de l'axe 121 lorsque le levier est déplacé en pivotement vers le haut pour serrer le frein. L'axe 351 s'étend, à son extrémité opposée à la tête épaulée 351a, à travers une découpe curviligne 220 ménagée sur l'aile 323 du carter, en regard du renfoncement 360, et comporte, sur sa portion d'extrémité s'étendant hors de cette découpe 220, une gorge annulaire 355 sur laquelle est monté à rotation un cliquet 350. Ce dernier présente une extrémité 352 apte à venir en prise avec la denture 106 d'une crémaillère 105 fixée intérieurement sur la cornière 252, la denture 106 s'étendant selon un arc de cercle centré sur l'axe 121.

Un ressort de rappel 270 travaillant en torsion est enroulé sur l'axe 121 et s'applique à ses extrémités sur la cornière 253 et sur l'aile 324 du carter pour exercer sur celui-ci un effort tendant à le ramener vers sa position rabattue.

Une tringle de commande 280, partiellement représentée, est montée à coulissement à l'intérieur du carter parallèlement au dos 325. Elle est munie, à une extrémité, d'un bouton poussoir connu en lui-même et non représenté, situé à l'extrémité libre du carter. La tringle de commande 280 est apte à agir par son autre extrémité 281 sur une branche 356 du cliquet 350, lorsque le bouton poussoir précité est enfoncé, pour entraîner en rotation le cliquet 350 autour de l'axe 351 et libérer l'extrémité 352 de celui-ci de la denture 106 de la crémaillère 105. La tringle de commande 280 est conformée pour s'insérer à son extrémité 281, comme représenté sur la figure 7, entre la surface interne du dos 325 du carter de levier de manoeuvre et une surface d'appui 290 de la pièce intermédiaire 200. Cette surface d'appui 290 est définie, dans l'exemple de réalisation décrit, par la surface externe d'une languette 291 formant saillie sur un bord longitudinal 202a du flanc 202 situé en regard du dos 325, et pliée en direction de l'autre flanc 201. Le mouvement de retour vers le bas du levier de manoeuvre est normalement empêché par butée d'une portion d'appui 288 de la face latérale de la tringle de commande 280, opposée au dos 325 et adjacente à l'extrémité 281, contre la surface d'appui 290 de la pièce intermédiaire 200. De préférence, comme représenté, la surface d'appui 290 s'étend parallèlement au dos 325 du carter lorsque la tringle de commande 280 est insérée entre la languette 291 et le dos 325 et elle se situe à proximité de la paroi 200a de la pièce intermédiaire 200 réunissant les flancs 201 et 202. Dans cette position de la tringle de commande 280, le bord transversal inférieur précité du renfoncement 360 vient en butée contre la tête épaulée 351a. La tringle de commande 280 est apte à quitter la surface d'appui 290 lorsqu'une traction est exercée sur le bouton poussoir précité, pour autoriser un mouvement de pivotement vers le bas du levier de manoeuvre indépendamment de la pièce intermédiaire 200, donc avec maintien du serrage du frein, comme cela va maintenant être expliqué à l'occasion de la description du fonctionnement de cette deuxième réalisation de l'invention.

Pour serrer le frein, l'utilisateur entraîne le carter du levier de manoeuvre 320 en rotation vers le haut, c'est-à-dire dans le sens horaire sur la figure 7. Lors de cette opération, le carter du levier de manoeuvre 320 déplace, par butée du bord transversal inférieur du renfoncement 360 contre la tête épaulée 351a de l'axe 351, la pièce intermédiaire 200 dans un mouvement de rotation dans le sens horaire sur les figures, et entraîne ainsi par l'intermédiaire des secteurs dentés 130 et 140 s'engrenant le secteur porte-câble 110 pour tirer sur le câble. Avantageusement, l'extrémité 352 du cliquet 350 est conformée pour glisser lors du serrage du frein sur la denture 106 de la crémaillère 105 sans qu'il soit nécessaire d'appuyer sur le bouton poussoir monté à l'extrémité de la tringle 280 opposée à l'extrémité 281. Pour faciliter le glissement du cliquet 350 sur la crémaillère 105, l'utilisateur peut appuyer sur ce bouton poussoir afin de libérer l'extrémité 352 du cliquet 350 de la denture 106.

Pour rabattre le carter du levier du manoeuvre tout en maintenant le serrage du frein, l'opérateur exerce une traction sur le bouton poussoir précité et entraîne la tringle de commande 280 en coulissement à l'intérieur du carter jusqu'à ce que la portion d'appui 288 de celle-ci quitte la surface d'appui 290 de la pièce intermédiaire 200. Le retrait de la tringle de commande 280 est limité par butée d'un ergot 282 formé sur la face latérale de celle-ci opposée au dos 325 contre un rivet 283 s'étendant entre les ailes 323 et 324 du carter. Lorsque la portion d'appui 288 de la tringle de commande 280 a quitté la surface d'appui 290, le carter du levier de manoeuvre peut effectuer un pivotement d'effacement dans le sens anti-horaire sur la figure 7, facilité par l'action du ressort de rappel 270. Bien entendu, le retrait de la tringle de commande 280 est suffisant pour permettre à l'extrémité 281 de se situer à une distance de l'axe 121, supérieure à la distance entre ce dernier et la paroi 200a réunissant les flancs 201 et 202, afin de franchir cette dernière lors du pivotement vers le bas du carter de levier de manoeuvre 320.

Pour desserrer le frein en partant de cette position effacée du carter de levier de manoeuvre 320, l'utilisateur lève à nouveau celui-ci afin d'insérer la tringle de commande 280 entre le dos 325 et la surface d'appui 290 et agir par l'extrémité 281 sur la branche 356 du cliquet 350 pour libérer son extrémité 352 de la denture 106.

Finalement, l'invention permet à la fois de disposer d'un levier de manoeuvre qui soit court et aisément manoeuvrable. Bien entendu, on peut proposer, sans sortir du cadre de la présente invention, de modifier la forme et l'agencement des éléments constituant le levier de manoeuvre pour adapter ce dernier à un entraînement au pied, par exemple.

## Revendications

1. Dispositif pour actionner un câble de commande (C) d'un frein de stationnement d'un véhicule, ce dispositif comprenant un secteur porte-câble (10;110) monté à pivotement autour d'un axe fixe et à relier audit câble et un levier de manoeuvre (20;320) monté à pivotement autour d'un axe fixe et apte à déplacer, lorsqu'entraîné manuellement en rotation, ledit secteur porte-câble pour agir sur le frein, caractérisé en ce que le levier de manoeuvre (20;320) et le secteur porte-câble (10;110) sont aptes à être couplés en rotation, au moins lors du fonctionnement du dispositif, par l'intermédiaire d'une liaison à engrenage épicycloïdal (30,40; 130,140) agencée de manière à démultiplier l'effort à exercer sur le levier de manoeuvre pour entrainer en rotation le secteur porte-câble.

2. Dispositif selon la revendication 1, caractérisé en ce qu'il comporte une crémaillère mobile solidaire du secteur porte-câble, en ce que le levier de manoeuvre est muni d'un cliquet mobile adapté à venir en prise avec la crémaillère pour interdire le mouvement de pivotement du levier dans un sens correspondant au desserrage du frein et en ce que le levier de manoeuvre comporte des moyens pour agir sur le cliquet et le libérer en vue de desserrer le frein.

3. Dispositif selon la revendication 1, caractérisé en ce qu'il comporte une crémaillère fixe (5;105), en ce que le levier de manoeuvre est muni d'un cliquet mobile (50;350) adapté à venir en prise avec la crémaillère pour interdire le mouvement de pivotement du levier dans un sens correspondant au desserrage du frein et en ce que le levier de manoeuvre comporte des moyens pour agir sur le cliquet et le libérer en vue de desserrer le frein.

4. Dispositif selon l'une des revendications 1 à 3, caractérisé en ce que le secteur porte-câble (10;110) et le levier de manoeuvre (20;320) sont respectivement montés à rotation autour d'un premier (11;111) et d'un deuxième (21;121) axes fixes, parallèles et non confondus.

5. Dispositif selon la revendication 4, caractérisé en ce que le secteur porte-câble (10;110) et le levier de manoeuvre (20;320) comportent respectivement un premier (40;140) et un deuxième (30;130) secteurs dentés s'étendant respectivement selon des premier et deuxième arcs de cercles centrés sur les premier (11;111) et deuxième (21;121) axes et conformés pour s'engrener, en ce que le rayon du premier secteur denté est supérieur au rayon du deuxième secteur denté et en ce que les dents (41;141) du premier secteur denté (40;140) sont dirigées radialement vers l'intérieur et les dents (31;131) du deuxième secteur denté (30;130) sont dirigées radialement vers l'extérieur.

6. Dispositif selon la revendication 5, caractérisé en ce que le secteur porte-câble (10;110) présente une lumière centrale (18;118), sur un bord de laquelle est découpé le premier secteur denté (40;140), traversée par le deuxième axe (21;121).

7. Dispositif selon l'une des revendications 5 et 6, caractérisé en ce que le levier de manoeuvre (20) comporte un carter (23,24,25) présentant deux portions embouties (26) fixées de part et d'autre d'une plaque (22) articulée sur le deuxième axe (21) et sur un bord de laquelle est découpé le deuxième secteur denté (30).

8. Dispositif selon l'une des revendications 5 et 6, caractérisé en ce que le levier de manoeuvre (320) comporte un carter (323,324,325) à l'intérieur duquel est monté à coulissement une tringle de commande (280) munie en extrémité d'un bouton poussoir, en ce que le dispositif comporte une pièce intermédiaire (200) solidaire du deuxième secteur denté (130) et sur laquelle est monté un cliquet mobile (350) apte à venir en prise sur une crémaillère (105) pour interdire le mouvement de pivotement de la pièce intermédiaire (200) dans le sens du desserrage du frein, la tringle de commande étant apte à agir par une extrémité (281) sur le cliquet (350) pour le libérer de la crémaillère lorsqu'une pression est exercée sur le bouton poussoir, le carter étant apte à déplacer par effet de butée la pièce intermédiaire (200) lorsqu'entraîné en rotation dans le sens d'une traction sur le câble de commande, le mouvement de retour du carter étant normalement empêché par butée de la tringle de commande (280) contre une surface d'appui (290) de la pièce intermédiaire (200), et en ce que la tringle de commande (280) est apte à quitter ladite surface d'appui (290) par traction sur le bouton poussoir, pour autoriser un pivotement d'effacement du carter indépendamment de la pièce intermédiaire (200).

9. Dispositif selon la revendication 8, caractérisé en ce que ladite pièce intermédiaire (200) comporte deux flancs (201,202) fixés de part et d'autre d'une plaque (122) articulée sur le deuxième axe (121), et sur laquelle est ménagé ledit deuxième secteur denté (130), et en ce que la pièce intermédiaire (200) porte un axe (351) sur lequel est monté à pivotement ledit cliquet (350), cet axe (351) comportant une extrémité axiale (351a) s'étendant dans un renfoncement (360) ménagé sur une aile (324) du carter, ce dernier étant apte à entrainer en pivotement la pièce intermédiaire (200) par butée d'un bord dudit renfoncement (360) contre ladite extrémité axiale (351a).

10. Dispositif selon l'une des revendications 7 et 9, caractérisé en ce que ladite lumière centrale (18;118) présente des bords (12a,12b;112a,112b) s'étendant depuis le premier secteur denté (40;140) vers le premier axe (11;111) en étant conformés pour contacter des bords opposés respectifs (22a,22b;122a,122b) de la plaque (22;122) articulée sur le deuxième axe (21;121) afin de limiter la course en rotation de cette dernière.
